# EUROPEAN PATENT SPECIFICATION

(11) **EP 4 371 738 B1**
(45) Date of publication and mention of the grant of the patent: **27.08.2025**
(21) Application number: 22842441.2
(22) Date of filing: 12.07.2022
(51) Int. Cl.: B29C 65/18, B29C 65/26, C09K 5/04, H01M 10/04, H01M 50/105, H01M 50/171, B29K 705/02, B29L 31/34

(54) **SEALING DEVICE**
VERSIEGELUNGSVORRICHTUNG
DISPOSITIF DE SCELLAGE

(30) Priority: 16.07.2021 KR 20210093793
(43) Date of publication of application: 22.05.2024
(73) Proprietor: LG Energy Solution, Ltd., Seoul 07335 (KR)
(72) Inventor: KOO, Sang Hyun, Daejeon 34122 (KR); JUNG, Su Taek, Daejeon 34122 (KR)
(74) Representative: Goddar, Heinz J.
(86) International application number: PCT/KR2022/010155
(87) International publication number: WO 2023/287179

(56) References cited:
- FR-A1- 2 691 099
- JP-A- H05 237 952
- JP-A- H08 216 155
- KR-A- 20120 034 398
- KR-A- 20160 019 259
- KR-A- 20160 133 041
- US-A- 4 737 231
- US-A1- 2015 175 285
- US-B2- 7 219 483

## Description

### TECHNICAL FIELD

The present invention relates to a sealing device, and more particularly, to a sealing device in which a temperature of a sealing surface of the sealing device is constantly maintained even though an appropriate solvent is continuously heated using a phase change of a material, thereby manufacturing a pouch sealing part having excellent quality in a product of a pouch type secondary battery.

### BACKGROUND ART

Secondary batteries that are repetitively chargeable and dischargeable may be divided into cylindrical type secondary batteries, prismatic type secondary batteries, and pouch type secondary batteries according to their structures and manufacturing methods. Among them, such a pouch type secondary battery is manufactured by accommodating an electrode assembly in a pouch sheet to seal the pouch sheet. When compared to other types of secondary batteries, the pouch type secondary battery has a simple structure and high capacity per unit volume and thus is widely used in vehicle batteries or energy storage devices.

In more detail, in the pouch type secondary battery, after forming a cup in a shape that is recessed in the pouch sheet, the electrode assembly is accommodated in the cup, and the pouch sheet is folded so that one area of the pouch sheet covers the electrode assembly. Then, a sealing part that seals a circumference of the electrode assembly is formed to manufacture the pouch type secondary battery.

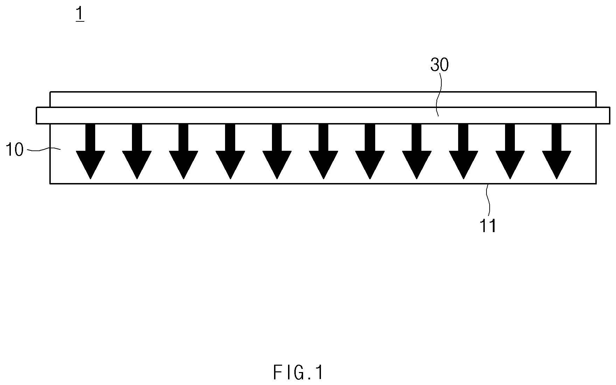

FIG. 1 is a cross-sectional view of a sealing device according to a related art.

Referring to FIG. 1, in the sealing device 1 according to the related art, a heat source 30 such as a heat line is built in a sealing tool 10 that performs sealing. When the sealing tool 10 is heated by the heat source 30, a temperature of the sealing tool 10 increases, and thus, a temperature of the sealing surface 11, which is in direct contact with a pouch to performs sealing, increases. Then, the sealing is performed after the temperature of the sealing surface 11 increases to a temperature suitable for the sealing.

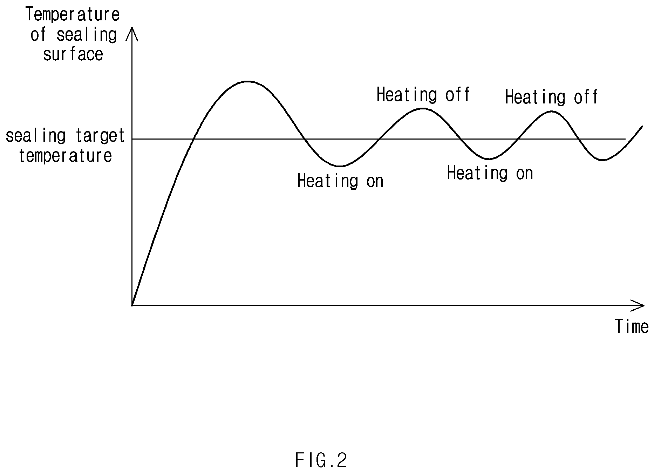

FIG. 2 is a view illustrating a variation in temperature of the sealing surface in the sealing device of FIG. 1.

Referring to FIG. 2, in the sealing device 1 according to the related art, the temperature of the sealing surface 11 is not always constantly maintained to a sealing target temperature. When the temperature of the sealing surface 11 increases above the sealing target temperature, the heat source 30 is controlled to be turned off so that the temperature of the sealing surface 11 decreases, and when the temperature of the sealing surface 11 deceases below the sealing target temperature, the heat source 30 is controlled to be is turned on to heat the sealing surface 11 so that the temperature of the sealing surface 11 increases. Therefore, the temperature of the sealing surface 11 is not always constantly maintained and is controlled to draw a wave shape as illustrated in FIG. 2.

If the pouch sealing is performed at such an irregular temperature, there are problems in that quality of the pouch sealing part is not uniform, and defects such as leakage or damage occur later.

US 2015/175285 A1 relates to a sealing rail for a packaging machine. The sealing rail has least one heating unit that is provided in a heating bar, and a sealing surface that is provided on a sealing bar. The sealing rail has at least one heat pipe that is oriented parallel to the sealing surface and in contact with both the heating bar and the sealing bar so as to transfer heat homogeneously from the heating bar to the sealing bar.

FR 2 691 099 A1 discloses a device for joining stacked objects by application of heat and pressure comprising (a) a heating unit having a rigid metal pressure plate, on a frame, inside which are features, such as heat exchange pipes, wherein the plate contacts the lower side of the stacked objects; and (b) a pressure unit applied to the upper surface of the stack having; an inflatable envelope applied to the frame; an elastomer block; and a deformable metal sheet between the block and the stack. The metal sheet may ensure even temperature and pressure distribution over the stack of objects.

US 7 219 483 B2 encompasses a heat seal die incorporating heat tube technology for controlling the variation of temperature across a heat seal die, and a system and method for portion control size packaging of flowable liquid-containing condiments in a portion size in the range from 1 to 5 ounces using such a heat seal die.

US 4 737 231 A relates to a device for sealing portions of an overlapped pair of single or composite films by contacting or facing an appropriately heated sealing surface of a heat-sealing member. The heat-sealing member is provided with the sealing surface in a part of its outer surface and with a sealed chamber therewithin in the vicinity of the sealing surface. The sealed chamber contains under decompression working liquid for evaporating and generating high-temperature condensable gas by being heated. The heat-sealing member further has a heat source in the interior or the exterior thereof adjacent to at least a part of the sealed chamber for heating the working liquid.

### DISCLOSURE OF THE INVENTION

### TECHNICAL PROBLEM

The present invention is devised to solve the above problems, and an object of the present invention is to provide a sealing device in which a temperature of a sealing surface of the sealing device is constantly maintained even though an appropriate solvent is continuously heated using a phase change of a material, thereby manufacturing a pouch sealing part having excellent quality in a product of a pouch type secondary battery.

### TECHNICAL SOLUTION

A sealing device (200) according to the present invention includes a sealing body (110) provided with a sealing surface (111), which is configured to seal a sealing target object, on one surface thereof, a solvent (120) that is in contact with the other surface of the sealing body (112) to supply heat to the sealing body (110), and a heat source (130) configured to heat the solvent (120) so that at least a portion of the solvent (120) is phase-changed into a gas, wherein while at least the portion of the solvent (120) is phase-changed into the gas, the sealing body (110) seals the sealing target object, the sealing device (200)further comprising a housing (140) having a structure connected to the sealing body (110) and configured to accommodate the solvent (120), and a condenser (150) configured to condense the solvent (120), which is phase-changed into the gas, into a liquid, wherein the condenser (150) is disposed above the heat source (130), and wherein a heat insulating part (260) is disposed between the heat source (130) and the condenser (150).

The housing may include sidewall extending upward from an edge of the sealing body, and the solvent may be contained in an inner space, which has a recessed shape formed by the other surface of the sealing body and the sidewall, in a liquid state.

At least a portion of the heat source may be contained in the solvent that is the liquid state, and the heat source may be spaced a predetermined distance from the sealing body.

The solvent may be vaporized by the heat source to move upward, and the solvent may be liquefied by the condenser to move downward.

The condenser may be disposed in the housing.

The solvent may be made of a material having a boiling point of 180 degrees Celsius and 200 degrees Celsius.

The solvent may be any one selected from ethylene glycol, propylene glycol, and dimethyl sulfoxide.

### ADVANTAGEOUS EFFECTS

The sealing device according to the present invention may include the sealing body having the sealing surface for sealing the sealing target object on one surface, the solvent that is in contact with the other surface of the sealing body to supply the heat to the sealing body, and the heat source that heats the solvent so that at least a portion of the solvent is phase-changed to the gas, and thus, even if the appropriate solvent is continuously heated using the phase change of the material, the temperature of the sealing surface of the sealing device may be maintained constantly. As a result, in the product of the pouch type secondary battery, the pouch sealing part may be manufactured with the uniform and excellent quality.

### BRIEF DESCRIPTION OF THE DRAWINGS

FIG. 1 is a cross-sectional view of a sealing device according to a related art.
FIG. 2 is a view illustrating a variation in temperature of the sealing surface in the sealing device of FIG. 1.
FIG. 3 is a cross-sectional view illustrating a sealing device according to Embodiment 1.
FIG. 4 is a view illustrating a variation in temperature of a sealing surface in the sealing device of FIG. 3.
FIG. 5 is a cross-sectional view illustrating a sealing device according to Embodiment 2 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

### Embodiment 1

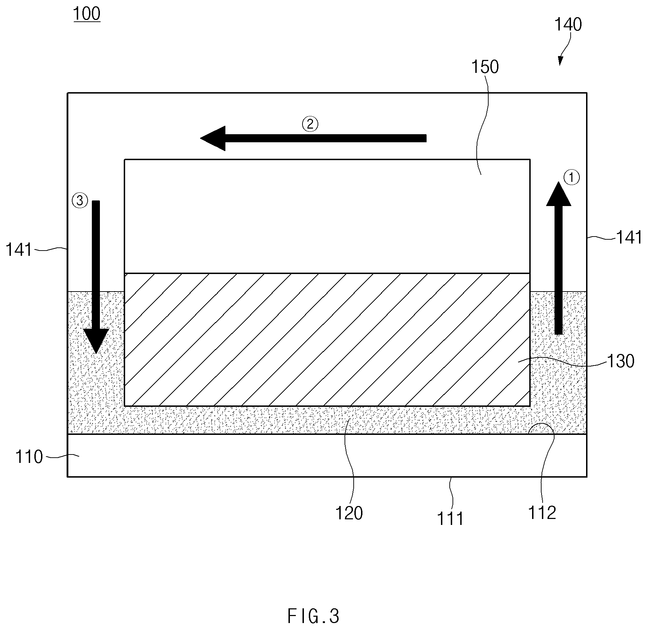

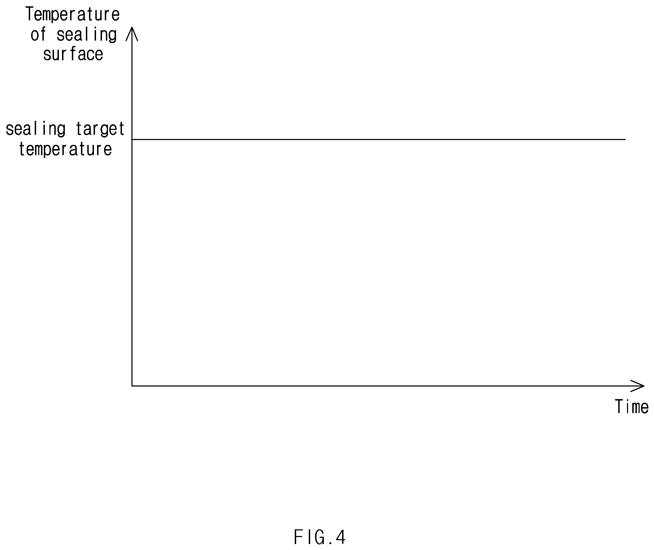

FIG. 3 is a cross-sectional view illustrating a sealing device according to Embodiment 1. FIG. 4 is a view illustrating a variation in temperature of a sealing surface in the sealing device of FIG. 3.

Referring to FIG. 3, a sealing device 100 according to Embodiment 1 may include a sealing body 110, a solvent 120, and a heat source 130.

The sealing body 110 may be provided with a sealing surface 111 for sealing a sealing target object on one surface. The sealing target object may be a pouch for a secondary battery, which is used as a secondary battery case. Among secondary batteries, a pouch type battery may be manufactured by forming an inner space by molding a pouch coated with a resin on aluminum, accommodating an electrode assembly in the inner space, and sealing a circumferential portion of the pouch disposed around the accommodated electrode assembly. The sealing device 100 according to Embodiment 1 of the present invention may be used for sealing the pouch in the sealing process while the pouch type secondary battery is manufactured.

The solvent 120 may be configured to supply heat to the sealing body 110 by being in contact with the other surface 112 of the sealing body. The solvent 120 has a liquid form and may be provided to be in contact with the other surface 112 of the sealing body. The solvent 120 may receive heat from the heat source 130 to be described below to increase in temperature, and when the temperature of the solvent 120 increases, the solvent 120 may supply the heat to the sealing body 110.

The heat source 130 may be configured to heat the solvent 120. Particularly, the heat source 130 may be configured to heat the solvent 120 so that at least a portion of the solvent 120 is phase-changed from a liquid to a gas. In addition, in the sealing device 100 according to Embodiment 1, the sealing body 110 may seal a sealing target object through the sealing surface 111 while at least a portion of the solvent 120 is phase-changed into the gas.

In this way, since the sealing device 100 according to Embodiment 1 uses a phase change of a material, the temperature of the sealing surface 111 of the sealing device 100 may be constantly maintained even though the appropriate solvent is continuously heated. As a result, the sealing of the pouch may be performed at a constant temperature. As a result, in the product of the pouch type secondary battery, the pouch sealing part may be manufactured with the uniform and excellent quality.

Referring to FIG. 2, it is seen that the temperature of the sealing surface 111 is constantly maintained in the sealing device 100 according to Embodiment 1. Particularly, the temperature of the sealing surface 111 may be maintained constantly according to the sealing target temperature, and in this case, the uniform and excellent sealing quality may be realized.

The sealing target temperature may be a value between 180 and 200 degrees Celsius. For this, the solvent 120 may be a material having a boiling point between 180 degrees Celsius and 200 degrees Celsius. In an embodiment, the solvent 120 may be any one selected from ethylene glycol, propylene glycol, and dimethyl sulfoxide. Ethylene glycol may have a boiling point of about 198 degrees Celsius. Propylene glycol may have a boiling point of about 188.2 degrees Celsius. Dimethyl sulfoxide may have a boiling point of about 189 degrees Celsius.

In this way, the sealing device 100 according to Embodiment 1 may perform the sealing at a constant temperature by using the point that when a material is phase-changed, energy is in and out, but there is no temperature change.

In addition, the sealing device 100 according to Embodiment 1 may further include a housing 140 to accommodate the solvent 120. The housing 140 has a structure connected to the sealing body 110 and may be configured to accommodate the solvent 120. Since the solvent 120 is disposed to be in contact with the other surface 112 of the sealing body, the housing 140 may be configured to extend from the other surface 112 of the sealing body.

Specifically, the housing 140 may include a sidewall 141 extending upward from an edge of the sealing body 110. When the sidewall 141 is formed, a space may be provided by the other surface 112 and the sidewall 141 of the sealing body. Here, the solvent 120 may be contained in an inner space of the recessed shape formed by the other surface 112 and the sidewall 141 of the sealing body in a liquid state. Due to this structure, even if the sealing body 110 moves around for the sealing, the solvent 120 may always be in contact with the other surface 112 of the sealing body.

The heat source 130 may be disposed in a shape of which at least a portion is contained in the solvent 120 that is in a liquid state to heat the solvent 120. In addition, the heat source 130 may be spaced a predetermined distance from the sealing body 110. If the heat source 130 is in contact with the sealing body 110, the temperature of the sealing body 110, in particular, the sealing surface 111 may be rapidly affected. Thus, the heat source 130 may be disposed so as not to touch the sealing body 110.

The sealing device 100 according to Embodiment 1 may further include a condenser 150 for condensing the solvent 120, which is phase-changed into the gas, into a liquid. The condenser 150 may be disposed above the heat source 130. In addition, the condenser 150 may be disposed in the housing 140. When the condenser 150 is disposed in the housing 140, a moving distance of the solvent 120 may be minimized to improve efficiency.

A principle of an operation of the solvent 120 in the sealing device 100 according to Embodiment 1 may be described as follows.

First, when the solvent 120 is heated by the heat source 130 to reach the boiling point, the solvent 120 starts to be vaporized and evaporated. During the process in which the solvent 120 is evaporated, the temperature of the solvent 120 may be constantly maintained, and also, the temperature of the sealing body 100 may be constantly maintained during that time.

Referring to FIG. 2, the solvent 120 heated and vaporized by the heat source 130 may move upward (see arrow ① in FIG. 2). The solvent 120 moving in the upward direction may meet the condenser 150. When the solvent 120 meets the condenser 150, the solvent 120 may be condensed (see an arrow ② in FIG. 2). That is, the solvent may be phase-changed from a gas to a liquid.

The solvent 120 may be liquefied by the condenser 150 and then move in a downward direction, which is a direction toward the sealing body 110 (see an arrow ③ in FIG. 2). Thus, the solvent 120 may be heated again by the heat source 130. The solvent 120 heated in this manner may proceed to a process of being vaporized again and may be continuously circulated in this cycle.

When the cycle is repeated in this manner, the heat source 130 may perform the sealing operation while continuously constantly maintaining the temperature of the solvent 120 and the temperature of the sealing surface 111 even if the heat is continuously supplied.

### Embodiment 2

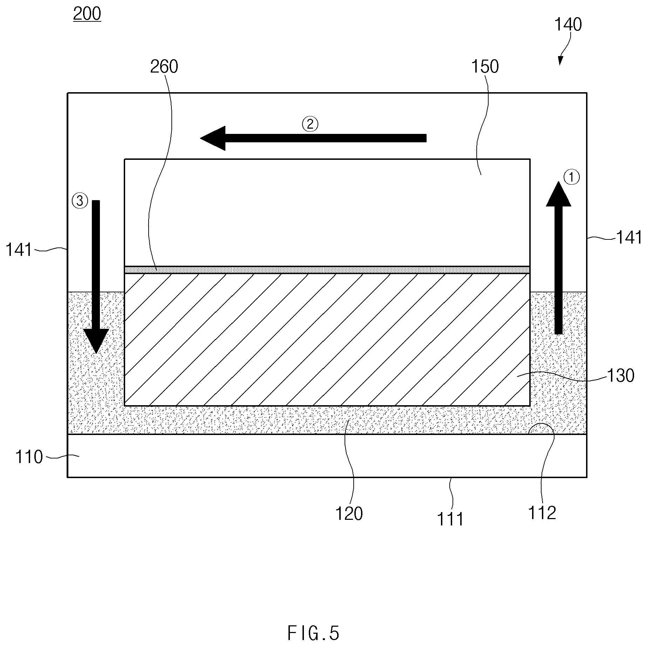

FIG. 5 is a cross-sectional view illustrating a sealing device according to Embodiment 2 of the present invention.

Embodiment 2 of the present invention is different from the sealing device according to Embodiment 1 of the present invention in that a heat insulating part 260 is further added.

The contents that are duplicated with Embodiment 1 will be omitted as much as possible, and Embodiment 2 will be described with a focus on the differences. That is, it is obvious that the contents not described in Embodiment 2 are supplemented with the contents of Embodiment 1 if necessary.

Referring to FIG. 5, in a sealing device 200 according to Embodiment 2 of the present invention, a heat insulating part 260 may be provided between a heat source 130 and a condenser 150. Since the heat source 130 and the condenser 150 are disposed in one housing 140, and the heat source 130 and the condenser 150 care maintained at different temperatures, it may be necessary that heat exchange does not occur between the heat source 130 and the condenser 150 in consideration of energy efficiency. Thus, the heat insulating part 260 that blocks the heat exchange may be provided between the heat source 130 and the condenser 150.

Here, specifically, the heat insulating part 260 may be a heat insulating gap or a heat insulating plate. Alternatively, the heat insulating part 260 may be a heat insulating coating or heat insulating material layer.

The heat insulating gap may provide a space gap between the heat source 130 and the condenser 150 for the thermal insulation. This gap may be a space gap formed while the heat source 130 and the condenser 150 are spaced apart from each other. In addition, a gas having a heat insulating property may be filled in the heat insulating gap, and the inside of the heat insulating gap may be provided as a vacuum.

The heat insulating plate or the heat insulating material layer may be disposed between the heat source 130 and the condenser 150 by forming a material made of a heat insulating component in the form of a layer. Therefore, a physical blocking layer may be formed. Particularly, when the heat insulating part 260 is provided as the heat insulating plate having a rigid property, the heat insulating part 260 may simultaneously serve as a support part supporting a weight of the condenser 150.

### [Description of the Symbols]

100, 200: Sealing device
110: Sealing body
111: Sealing surface
112: The other surface of sealing body
120: Solvent
130: Heat source
140: Housing
141: Sidewall
150: Condenser
260: Heat insulating part

## Claims

1. A sealing device (200) comprising:
a sealing body (110) provided with a sealing surface (111), which is configured to seal a sealing target object, on one surface thereof;
a solvent (120) that is in contact with the other surface of the sealing body (112) to supply heat to the sealing body (110); and
a heat source (130) configured to heat the solvent (120) so that at least a portion of the solvent (120) is phase-changed into a gas,
wherein while at least the portion of the solvent (120) is phase-changed into the gas, the sealing body (110) seals the sealing target object, the sealing device (200)further comprising a housing (140) having a structure connected to the sealing body (110) and configured to accommodate the solvent (120), and **characterized in that** the sealing device further comprises
a condenser (150) configured to condense the solvent (120), which is phase-changed into the gas, into a liquid, wherein the condenser (150) is disposed above the heat source (130), and
wherein a heat insulating part (260) is disposed between the heat source (130) and the condenser (150).

2. The sealing device (200) of claim 1, wherein the housing (140) comprises a sidewall (141) extending upward from an edge of the sealing body (110), and
the solvent (120) is contained in an inner space, which has a recessed shape formed by the other surface of the sealing body (112) and the sidewall (141), in a liquid state.

3. The sealing device (200) of claim 2, wherein at least a portion of the heat source (130) is contained in the solvent (120) that is the liquid state, and
the heat source (130) is spaced a predetermined distance from the sealing body (110).

4. The sealing device (200) of claim 1, wherein the solvent (120) is vaporized by the heat source (130) to move upward, and
the solvent (120) is liquefied by the condenser (150) to move downward.

5. The sealing device (200) of claim 4, wherein the condenser (150) is disposed in the housing (140).

6. The sealing device (200) of claim 1, wherein the solvent (120) is made of a material having a boiling point of 180 degrees Celsius to 200 degrees Celsius.

7. The sealing device (200) of claim 6, wherein the solvent (120) is any one selected from ethylene glycol, propylene glycol, and dimethyl sulfoxide.

## Patentansprüche

1. Dichtungsvorrichtung (200), umfassend:
einen Dichtungskörper (110), der auf einer Oberfläche davon mit einer Dichtungsoberfläche (111) versehen ist, die konfiguriert ist, um ein Dichtungszielobjekt abzudichten;
ein Lösungsmittel (120), das mit der anderen Oberfläche des Dichtungskörpers (112) in Kontakt steht, um dem Dichtungskörper (110) Wärme zuzuführen; und
eine Wärmequelle (130), die konfiguriert ist, um das Lösungsmittel (120) zu erwärmen, so dass mindestens ein Teil des Lösungsmittels (120) in eine Gasphase überführt wird,
wobei, während mindestens der Teil des Lösungsmittels (120) in die Gasphase überführt wird, der Dichtungskörper (110) das Dichtungszielobjekt abdichtet, wobei die Dichtungsvorrichtung (200) ferner ein Gehäuse (140) umfasst, das eine Struktur aufweist, die mit dem Dichtungskörper (110) verbunden ist und konfiguriert ist, um das Lösungsmittel (120) aufzunehmen, und **dadurch gekennzeichnet, dass** die Dichtungsvorrichtung ferner umfasst:
einen Kondensator (150), der konfiguriert ist, um das Lösungsmittel (120), das in die Gasphase überführt ist, zu einer Flüssigkeit zu kondensieren, wobei der Kondensator (150) über der Wärmequelle (130) angeordnet ist, und
wobei ein wärmeisolierendes Teil (260) zwischen der Wärmequelle (130) und dem Kondensator (150) angeordnet ist.

2. Dichtungsvorrichtung (200) nach Anspruch 1, bei der das Gehäuse (140) eine Seitenwand (141) umfasst, die sich von einer Kante des Dichtungskörpers (110) nach oben erstreckt, und
das Lösungsmittel (120) in einem flüssigen Zustand in einem Innenraum enthalten ist, der eine vertiefte Form aufweist, die durch die andere Oberfläche des Dichtungskörpers (112) und die Seitenwand (141) gebildet wird.

3. Dichtungsvorrichtung (200) nach Anspruch 2, bei der mindestens ein Teil der Wärmequelle (130) in dem Lösungsmittel (120) enthalten ist, das in dem flüssigen Zustand vorliegt, und
die Wärmequelle (130) in einem vorbestimmten Abstand von dem Dichtungskörper (110) beabstandet ist.

4. Dichtungsvorrichtung (200) nach Anspruch 1, bei der das Lösungsmittel (120) durch die Wärmequelle (130) verdampft wird, um sich nach oben zu bewegen, und
das Lösungsmittel (120) durch den Kondensator (150) verflüssigt wird, um sich nach unten zu bewegen.

5. Dichtungsvorrichtung (200) nach Anspruch 4, bei der der Kondensator (150) in dem Gehäuse (140) angeordnet ist.

6. Dichtungsvorrichtung (200) nach Anspruch 1, bei der das Lösungsmittel (120) aus einem Material mit einem Siedepunkt von 180 Grad Celsius bis 200 Grad Celsius hergestellt ist.

7. Dichtungsvorrichtung (200) nach Anspruch 6, bei der das Lösungsmittel (120) eines ist, das aus Ethylenglykol, Propylenglykol und Dimethylsulfoxid ausgewählt ist.

## Revendications

1. Dispositif de scellage (200) comprenant :
un corps de scellage (110) doté d'une surface de scellage (111), qui est configuré pour sceller un objet cible de scellage, sur sa surface ;
un solvant (120) qui est en contact avec l'autre surface du corps de scellage (112) pour fournir de la chaleur au corps de scellage (110) ; et
une source de chaleur (130) configurée pour chauffer le solvant (120) de sorte qu'au moins une partie du solvant (120) change de phase en un gaz,
dans lequel, pendant qu'au moins la partie du solvant (120) change de phase en ledit gaz, le corps de scellage (110) scelle l'objet cible de scellage, le dispositif de scellage (200) comprenant en outre un boîtier (140) ayant une structure reliée au corps de scellage (110) et configuré pour accueillir le solvant (120), et **caractérisé en ce que** le dispositif de scellage comprend en outre
un condenseur (150) configuré pour condenser le solvant (120), qui change de phase en ledit gaz, en un liquide, dans lequel le condenseur (150) est disposé au-dessus de la source de chaleur (130), et
dans lequel une partie d'isolation thermique (260) est disposée entre la source de chaleur (130) et le condenseur (150).

2. Dispositif de scellage (200) selon la revendication 1, dans lequel le boîtier (140) comprend une paroi latérale (141) s'étendant vers le haut depuis un bord du corps de scellage (110), et
le solvant (120) est contenu dans un espace intérieur, qui a une forme renfoncée formée par l'autre surface du corps de scellage (112) et la paroi latérale (141), dans un état liquide.

3. Dispositif de scellage (200) selon la revendication 2, dans lequel au moins une partie de la source de chaleur (130) est contenue dans le solvant (120) qui est l'état liquide, et
la source de chaleur (130) est espacée d'une distance prédéterminée du corps de scellage (110).

4. Dispositif de scellage (200) selon la revendication 1, dans lequel le solvant (120) est vaporisé par la source de chaleur (130) pour se déplacer vers le haut, et
le solvant (120) est liquéfié par le condenseur (150) pour se déplacer vers le bas.

5. Dispositif de scellage (200) selon la revendication 4, dans lequel le condenseur (150) est disposé dans le boîtier (140).

6. Dispositif de scellage (200) selon la revendication 1, dans lequel le solvant (120) est constitué d'un matériau ayant un point d'ébullition de 180 degrés Celsius à 200 degrés Celsius.

7. Dispositif de scellage (200) selon la revendication 6, dans lequel le solvant (120) est sélectionné parmi l'éthylène glycol, le propylène glycol et le diméthylsulfoxyde.
